# EUROPEAN PATENT SPECIFICATION

(11) **EP 2 142 861 B1**
(45) Date of publication and mention of the grant of the patent: **12.10.2016**
(21) Application number: 08735863.6
(22) Date of filing: 07.04.2008
(51) Int. Cl.: F25B 49/02

(54) **A COOLING DEVICE AND THE CONTROL METHOD THEREOF**
KÜHLVORRICHTUNG UND STEUERVERFAHREN DAFÜR
DISPOSITIF DE REFROIDISSEMENT ET PROCÉDÉ DE COMMANDE ASSOCIÉ

(30) Priority: 26.04.2007 TR 200702814
(43) Date of publication of application: 13.01.2010
(73) Proprietor: Arçelik Anonim Sirketi, 34950 Istanbul (TR)
(72) Inventor: ARISOY, Emre, 34950 Istanbul (TR); GULBAS, Ferkan, 34950 Istanbul (TR)
(86) International application number: PCT/EP2008/054127
(87) International publication number: WO 2008/132020

(56) References cited:
- JP-A- 11 325 552
- JP-A- 2006 250 378

## Description

The present invention relates to a cooling device that comprises a variable speed compressor and the control method thereof.

In cooling devices, the speed of the compressor has to be regulated as desired according to the cooling requirement. For regulating the available variable speed compressors used in refrigerators to the intended speed and to continuously operate at that speed is possible by means of using more than one thermostat terminals.

When more than one processor controlled electronic thermostat is used, one of the thermostats is utilized for sending compressor on-off signals from the thermostat card to the inverter card. That is, when refrigeration requirement of the cooling device arises, the first thermostat operates the compressor through the inverter card. When speed change is wanted, the inverter card operates the compressor by implementing a predefined increase or decrease with respect to the existing operating speed. In the said technique, since speed is regulated by taking into consideration the existing speed, the echelon adjustment can change over time. The second thermostat is used when a quick freezing requirement of the cooling device arises. When operation signal is sent from the thermostat card to the inverter card, the compressor is enabled to operate at the appropriate speed for performing the quick freezing function. Consequently, the compressor is enabled to operate at a high speed for the quick freezing function of the cooling device.

In state of the art, different methods have been suggested for controlling the compressors in cooling devices.

In the cooling device in the Japanese Patent Application No JP2006275460, the speed of the compressor is controlled by the ON and OFF value received from a thermostat. In this embodiment, the ON and OFF duration of the thermostat is effective in adjusting the control frequency of the compressor. Thus energy savings is provided. The document JP 2006 205378 describes a cooling device having a control unit, an inverter and a variable speed compressor.

In the European Patent Document No EP0043279, a system is described for a heating or cooling apparatus wherein the evaluation of whether the ON or OFF times received from the thermostat exceeds or is less than the preset reference times and an output is attained based on the said evaluation whereby the compressor is controlled.

The aim of the present invention is the realization of a cooling device and the control method thereof wherein the speed adjustment of the variable speed compressor is performed effectively.

The cooling device and the control method thereof realized in order to attain the aim of the present invention, is explicated in the attached claims.

In the cooling device of the present invention, when operating conditions arise for the variable speed compressor, the compressor is not operated right away. A certain "T" time is waited before the compressor is operated. A control unit and an inverter control the compressor. The control unit generates digital signals according to values received from the sensor. During the "T" time, the control unit counts the number of these signals generated by the control unit and the compressor is driven by the inverter according to the compressor speed that corresponds to the predefined reference signal count as a result of the number count.

In this embodiment, even if the necessary conditions for the operation of the compressor are present, the compressor is not operated before the predefined constant "T" time ends. The reason is to correctly comprehend the speed at which the compressor should operate. Matching the correct digital signal number with the correct speed depends on this criterion. When the defined constant "T" time ends, the compressor is operated.

The cooling device realized in order to attain the aim of the present invention is illustrated in the attached figures, where:
Figure 1 - is the schematic view of the cooling device.
Figure 2 - is the operation - time diagram of the thermostat and the compressor in the cooling device.
Figure 3 - is the flow chart of the cooling device control method.

The elements illustrated in the figures are numbered as follows:
1. Cooling device
2. Compressor
3. Inverter
4. Sensor
5. Control unit

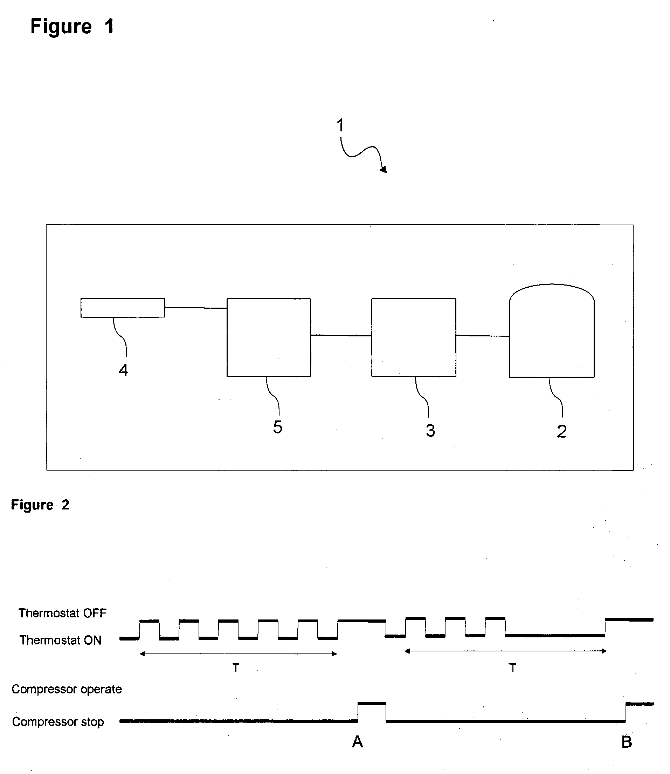

The cooling device (1) comprises a variable speed compressor (2) for implementing the refrigeration cycle, an inverter (3) that controls the speed of the compressor (2) and driving the compressor (2) according to the determined speed, one or more sensors (4) disposed therein for detecting the temperature changes in the cooling volume, and a control unit (5) that supplies the required digital data to the inverter (3) for performing the necessary speed adjustment of the compressor (2) depending on the ambient temperature (Figure 1).

The inverter (3) holds up the compressor (2) for a certain "T" time before operating when operating conditions for the compressor (2) arise and drives the compressor (2) according to the necessary speed by evaluating the signals delivered by the control unit (5) during this time.

The control unit (5) is preferably a processor controlled electronic card. The signals generated by the sensor (4) are converted to digital signals by the control unit (5). The control unit (5) is supplied with the data of the conditions under which how many signals should be generated depending on the info received from the sensor (4).

The inverter (3), with the compressor (2) connected to the output and the control unit (5) to the input, matches the signals received from the control unit (5) and drives the compressor (2) as per the required speed. The data of the predetermined speed ranges is loaded to the inverter (3) by the producer for performing the speed adjustment of the variable speed compressor (2).

In the embodiment of the present invention, the refrigeration cycle should be activated by operating the compressor (2) according to data received from the sensor (4) when the ambient temperature of the cooling device (1) reaches a certain value, (when food is emplaced in the cooling device (1), when the door is opened, when the outside temperature increases etc.). The data received from the sensor (4) is evaluated by the control unit (5) and signals are generated in accordance with this data. The compressor (2) is not operated right away while the signals are generated by the control unit (5). For a constant "T" time duration before the compressor (2) is operated, the signals received from the control unit (5) are listened to. At the end of a "T" time duration predetermined by the producer, the signal number value received from the control unit (5) and the speed value assigned to the said value is determined by the inverter (3) and the compressor (2) is operated according to this speed.

In the embodiment of the present invention, the inverter (3) is supplied with the data of the signal number value received from the control unit (5) and the speed rates info corresponding to these signal number data.

In an embodiment of the present invention, an electronic controlled thermostat is used as the sensor (4). In this embodiment, when the temperature of the cooling device (1) interior volume increases, an on/off (0-1) signal is generated by the thermostat disposed at the interior volume that detects the temperature of the interior volume and sent to the control unit (5). When refrigeration is required for the cooling device (1), the compressor (2) is not operated right away. The inverter (3) counts how many times the sensor (4) is on and off for a certain "T" time duration. At the end of the defined "T" time, the inverter (3) matches the compressor (2) speed value with the data of how many times the sensor (4) is on and off and operates the compressor (2) by adjusting the speed according to the matched speed info (Figure 2). For example, in the embodiment of the present invention, for a five speed compressor (2), operating data at the fifth speed is determined with generating five signals by the control unit (5) during a constant "T" time. In this case, when the "T" time period ends, the compressor (2) is operated at the fifth speed (Shown as point "A" in Figure 2). For the same compressor (2) operating info at third speed is determined with generating three signals by the control unit (5) during the same constant "T" time duration. In this case, when the "T" time period ends, the compressor (2) is operated at the third speed (Shown as point "B" in Figure 2).

Consequently, operation of an n speed compressor (2) at speed X is determined with the number of signals generated by the control unit (5) in a constant "T" time duration. The compressor (2) is operated after the said "T" time duration.

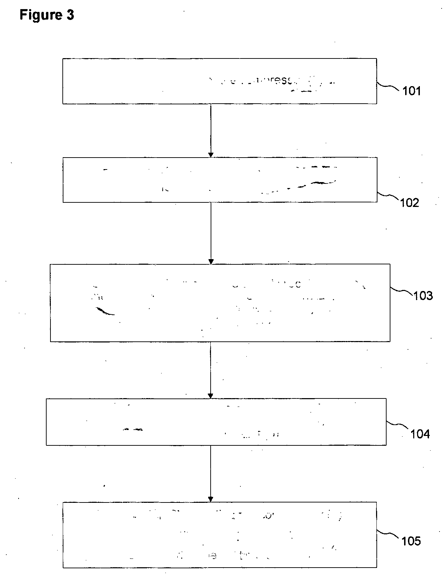

The control method for the cooling device (1) of the present invention comprises the following steps of:
- Operation conditions for the compressor (2) arise (101)
- Postponing operation of the compressor (2) for a "T" time duration (102)
- Listening to and counting the signals received from the control unit (5) by the inverter (3) for a constant "T" time duration before the compressor (2) starts to operate (103),
- Determining the compressor (2) speed according to number of signals received from the control unit (5) (104) and
- The inverter (3) operating the compressor (2) according to the number of signals received from the control unit (5) at the end of the "T" time duration (105) (Figure 3).

Since the cooling device (1) of the present invention and the control method thereof determine the most suitable speed for the existing conditions of the compressor (2), it is not necessary to reach the desired speed by turning on and off the compressor (2) according to previous conditions. The compressor (2) is operated at the most suitable speed in the first time. Thus the unnecessary turning on and off of the compressor (2) is prevented thereby reducing energy and time consumption of the compressor (2). This allows for the cooling device (1) to perform the cooling and/or freezing functions more effectively.

## Claims

1. A control method for operating a cooling device that comprises a variable speed compressor (2) for implementing the refrigeration cycle, an inverter (3) that controls the speed of the compressor (2) and drives the compressor (2) according to the determined speed, one or more sensors (4) for detecting the temperature changes in the cooling volume, and a control unit (5) that supplies the required digital data to the inverter (3) for performing the necessary speed adjustment of the compressor (2) **characterized by** the following steps:
- Operation conditions for the compressor (2) arise (101)
- Postponing operation of the compressor (2) for a predefined constant "T" time duration (102)
- Listening to and counting the signals received from the control unit (5) by the inverter (3) for a predefined constant "T" time duration before the compressor (2) starts to operate (103),
- Determining the compressor (2) speed according to number of signals received from the control unit (5) (104) and
- At the end of a "T" time duration predetermined by the producer, the inverter (3) determining the signal number value received from the control unit (5) and the speed value assigned to the said value and the inverter operating the compressor (2) according to this speed.

2. A control method as in Claim 1 in which a sensor (4) is used which is an electronic controlled thermostat.

3. A control method as in Claim 1 in which an inverter (3) is used that matches the required compressor (2) speed value with the data of how many times the sensor (4) is on and off received from the control unit (5) and operates the compressor (2) by adjusting the speed according to the matched speed data.

4. A cooling device (1) that comprises a variable speed compressor (2) for implementing the refrigeration cycle, an inverter (3) that controls the speed of the compressor (2) and drives the compressor (2) according to the determined speed, one or more sensors (4) for detecting the temperature changes in the cooling volume, and a control unit (5) that supplies the required digital data to the inverter (3) for performing the necessary speed adjustment of the compressor (2) and **characterized by** the inverter (3):
- which, when the operating conditions for the compressor (2) arise, does not operate the compressor before a predefined constant "T" time duration ends,
- which listens to the signals received from the control unit (5) during the predefined constant "T" time duration before the compressor (2) is operated, and
- which after the predetermined constant "T" time duration drives the compressor (2) according to the required speed by evaluating the signals delivered by the control unit (5) during this predefined constant "T" time duration.

5. A cooling device (1) as in Claim 4, **characterized by** a sensor (4) which is an electronic controlled thermostat.

6. A cooling device (1) as in Claim 4, **characterized by** an inverter (3) that matches the required compressor (2) speed value with the data of how many times the sensor (4) is on and off received from the control unit (5) and operates the compressor (2) by adjusting the speed according to the matched speed data.

## Patentansprüche

1. Steuerungsverfahren zum Betreiben einer Kühlvorrichtung, die einen Kompressor mit variabler Drehzahl (2) zum Implementieren des Kühlzyklus, einen Wechselrichter (3), der die Drehzahl des Kompressors (2) steuert und den Kompressor (2) gemäß der bestimmten Drehzahl antreibt, einen oder mehrere Sensoren (4) zum Erkennen der Temperaturveränderungen im Kühlvolumen und eine Steuereinheit (5) umfasst, die die benötigten digitalen Daten zum Durchführen der notwendigen Drehzahlanpassung des Kompressors (2) an den Wechselrichter (3) bereitstellt, **gekennzeichnet durch** die folgenden Schritte:
- Entstehen von Betriebsbedingungen für den Kompressor (2) (101)
- Verzögern des Betriebs des Kompressors (2) für eine vorgegebene konstante Zeitdauer "T" (102)
- Horchen auf und Zählen von Signalen, die der Wechselrichter (3) von der Steuereinheit (5) empfängt, für eine vorgegebene konstante Zeitdauer "T", bevor der Kompressor (2) den Betrieb beginnt (103),
- Bestimmen der Drehzahl des Kompressors (2) gemäß der Anzahl von Signalen, die von der Steuereinheit (5) (104) empfangen werden, und
- zum Ende der vom Hersteller vorgegebenen Zeitdauer "T" Bestimmen des Signalanzahlwerts von der Steuereinheit (5) und des Drehzahlwerts, der diesem Wert zugeordnet ist, **durch** den Wechselrichter (3), und Betreiben des Kompressors (2) gemäß dieser Drehzahl **durch** den Wechselrichter.

2. Steuerungsverfahren nach Anspruch 1, wobei ein Sensor (4) verwendet wird, der ein elektronisch gesteuertes Thermostat ist.

3. Steuerungsverfahren nach Anspruch 1, wobei ein Wechselrichter (3) verwendet wird, der den benötigten Drehzahlwert des Kompressors (2) mit den Daten dazu, wie oft der Sensor (4) ein- und ausgeschaltet ist, von der Steuereinheit (5) abgleicht und den Kompressor (2) durch Anpassen der Drehzahl gemäß den abgeglichenen Drehzahldaten betreibt.

4. Kühlvorrichtung (1), die einen Kompressor mit variabler Drehzahl (2) zum Implementieren des Kühlzyklus, einen Wechselrichter (3), der die Drehzahl des Kompressors (2) steuert und den Kompressor (2) gemäß der bestimmten Drehzahl antreibt, einen oder mehrere Sensoren (4) zum Erkennen der Temperaturveränderungen im Kühlvolumen und eine Steuereinheit (5) umfasst, die die benötigten digitalen Daten zum Durchführen der notwendigen Drehzahlanpassung des Kompressors (2) an den Wechselrichter (3) bereitstellt, **dadurch gekennzeichnet, dass** der Wechselrichter (3):
- wenn die Betriebsbedingungen für den Kompressor (2) entstehen, den Kompressor erst nach Ablauf einer vorgegebenen konstanten Zeitdauer "T" betreibt,
- auf während der vorgegebenen konstanten Zeitdauer "T", bevor der Kompressor (2) betrieben wird, von der Steuereinheit (5) empfangene Signale horcht, und
- nach der vorgegebenen konstanten Zeitdauer "T" den Kompressor (2) gemäß der notwendigen Drehzahl antreibt, indem er die Signale auswertet, die von der Steuereinheit (5) während der vorgegebenen konstanten Zeitdauer "T" bereitgestellt werden.

5. Kühlvorrichtung (1) nach Anspruch 4, **gekennzeichnet durch** einen Sensor (4), der ein elektronisch gesteuertes Thermostat ist.

6. Kühlvorrichtung (1) nach Anspruch 4, **gekennzeichnet durch** einen Wechselrichter (3), der den benötigten Drehzahlwert des Kompressors (2) mit den Daten dazu, wie oft der Sensor (4) ein- und ausgeschaltet ist, von der Steuereinheit (5) abgleicht und den Kompressor (2) **durch** Anpassen der Drehzahl gemäß den abgeglichenen Drehzahldaten betreibt.

## Revendications

1. Un procédé pour faire fonctionner un dispositif de refroidissement qui comprend un compresseur à vitesse variable (2) pour effectuer le cycle de réfrigération, un inverseur (3) qui commande la vitesse du compresseur (2) et qui entraîne le compresseur (2) en fonction de la vitesse déterminée, un ou plusieurs capteurs (4) pour détecter les changements de température dans le volume de refroidissement, et une unité de commande (5) qui fournit les données numériques nécessaires à l'inverseur (3) pour effectuer le réglage de la vitesse nécessaire du compresseur (2) **caractérisé par** les étapes suivantes :
- Des conditions de fonctionnement pour le compresseur (2) se présentant (101),
- Reporter le fonctionnement du compresseur (2) pour une durée de temps « T » prédéterminée constante (102),
- Écouter et compter les signaux reçus de l'unité de commande (5) par l'inverseur (3) pour une durée de temps « T » prédéterminée constante avant que le compresseur (2) commence à fonctionner (103),
- Déterminer la vitesse du compresseur (2) en fonction du nombre de signaux reçus de l'unité de commande (5) (104) et
- À la fin d'une durée de temps « T » prédéterminée par le fabricant, déterminer par l'inverseur (3) la valeur de nombre de signaux reçue de l'unité de commande (5) et la valeur de vitesse assignée à ladite valeur et faire fonctionner le compresseur (2) par l'inverseur en fonction de cette vitesse.

2. Un procédé de commande selon la Revendication 1, où un capteur (4) qui est un thermostat à commande électronique est utilisé.

3. Un procédé de commande selon la Revendication 1, où un inverseur (3) est utilisé, qui associe la valeur de vitesse nécessaire du compresseur (2) aux données de combien de fois le capteur (4) est en marche et hors tension, reçues de l'unité de commande (5) et faire fonctionner le compresseur (2) en ajustant la vitesse en fonction des données de vitesse associées.

4. Un dispositif de refroidissement (1) qui comprend un compresseur à vitesse variable (2) pour effectuer le cycle de réfrigération, un inverseur (3) qui commande la vitesse du compresseur (2) et qui entraîne le compresseur (2) en fonction de la vitesse déterminée, un ou plusieurs capteurs (4) pour détecter les changements de température dans le volume de refroidissement, et une unité de commande (5) qui fournit les données numériques nécessaires à l'inverseur (3) pour effectuer le réglage de la vitesse nécessaire du compresseur (2) **caractérisé par** l'inverseur (3)
- qui, lorsque les conditions de fonctionnement pour le compresseur (3) se présentent, ne faire fonctionner pas le compresseur avant que une durée de temps « T » prédéterminée constante se termine,
- qui écoute les signaux reçus de l'unité de commande (5) pour une durée de temps « T » prédéterminée constante avant que le compresseur (2) est actionné, et
- qui, après la durée de temps « T » prédéterminée constante, entraîne le compresseur (2) en fonction de la vitesse nécessaire en évaluant les signaux délivrés par l'unité de commande (5) pendant la durée de temps « T » prédéterminée constante.

5. Un dispositif de refroidissement (1) selon la Revendication 4, **caractérisé par** un capteur (4) qui est un thermostat à commande électronique.

6. Un dispositif de refroidissement (1) selon la Revendication 4, **caractérisé par** un inverseur (3) qui associe la valeur de vitesse nécessaire du compresseur (2) aux données de combien de fois le capteur (4) est en marche et hors tension, reçues de l'unité de commande (5) et faire fonctionner le compresseur (2) en ajustant la vitesse en fonction des données de vitesse associées.
